# EUROPEAN PATENT APPLICATION

(11) **EP 4 799 991 A1**
(43) Date of publication of application: **02.09.2026**
(21) Application number: 25305255.9
(22) Date of filing: 26.02.2025
(51) Int. Cl.: C04B 28/02, C04B 28/04, C04B 111/72, C04B 111/74

(54) **COMPOSITIONS COMPRISING POLYELECTROLYTES AND A HYDRAULIC BINDER**

(71) Applicant: Saint-Gobain Weber France, 94370 Sucy en Brie (FR)
(72) Inventor: The designation of the inventor has not yet been filed
(74) Representative: Saint-Gobain Recherche

(57) **Abstract**

The present invention relates to a composition comprising a cationic polyelectrolyte, an anionic polyelectrolyte, a water-soluble mineral salt, and a hydraulic binder. It also relates to a method for repairing a water or underwater leak, using said composition.

## Description

The present invention relates to a composition comprising a cationic polyelectrolyte, an anionic polyelectrolyte, a water-soluble mineral salt, and a hydraulic binder. It also relates to a method for repairing a water or underwater leak, using said composition.

Repairs of underwater and underground structures present a significant challenge due to the extreme environmental conditions these structures are exposed to. High hydrostatic pressures, constant humidity, marine currents, and the presence of chemical contaminants are all factors that complicate these interventions. To meet these requirements, specific cement compositions have been developed, tailored to the difficult conditions of these environments.

The cements used for underwater and underground repairs must possess particular properties to ensure their effectiveness and durability. Among these properties, the ability to set quickly is essential to avoid washout, which is the loss of cement material in water before it hardens. Rapid-setting cements are therefore commonly used in these applications. They contain additives that accelerate the setting process and increase initial strength, allowing for quick and effective repairs.

Additionally, high-strength cements are also favored for their ability to withstand high pressures and the difficult conditions encountered underwater or underground. These cements can for instance be reinforced with fibers to improve their durability. Expansive cements, which slightly expand during setting, are also used to fill cracks and ensure better sealing. This property is particularly useful for repairing underground structures where sealing is crucial to prevent water infiltration.

Hydrophobic cements, formulated to repel water, also play a crucial role in these repairs. They contain hydrophobic agents that prevent water from penetrating the material, thus ensuring better durability and increased protection against infiltration. These cements are essential for repairs where sealing is critical, such as in tunnels, dams, and underwater foundations.

The use of particular anti-washout admixtures has also been described. Such admixtures improve the cohesion of the cement mix and reduce the risk of washout. These admixtures increase the viscosity of the mix, making it less likely to be washed away by water. Additionally, the use of pre-filled cement bags is an effective method for certain applications. These bags are placed directly in the water or in underground areas, where they harden without the risk of washout.

Underwater placement techniques, such as tremie or pressure injection, also allow for controlled placement of the cement, minimizing contact with water and the risk of washout. For example, tremie involves slowly immersing the cement in water, while pressure injection involves pumping the cement directly into the repair area. Finally, the use of watertight formwork around the repair area can help contain the cement until it has sufficiently hardened to resist washout. The formwork can be made from impermeable materials and is often used in combination with anti-washout admixtures for maximum effectiveness.

The proposed solutions for underwater and underground cement repairs, while effective, have several drawbacks. Anti-washout admixtures can be costly and may not be compatible with all cements, leading to performance variability. Pre-filled cement bags are limited to small-scale repairs, can be challenging to place correctly, and may result in material waste. Underwater placement techniques like tremie and pressure injection require specialized equipment and skilled personnel, increasing costs and the potential for human error, while also potentially impacting the environment. Watertight formwork is complex and time-consuming to design and install, expensive, and can be difficult to remove without damaging the repaired structure.

### SUMMARY

In this context, the inventors have demonstrated that the above-mentioned limitations could be overcome by using a composition combining a hydraulic binder with polyelectrolytes and a water-soluble mineral salt.

It is known that when an aqueous solution of an anionic polyelectrolyte (also called hereafter "polyanion") and an aqueous solution of a cationic polyelectrolyte (also called hereafter "polycation") are mixed together, the polyelectrolytes will immediately associate and form a solid complex (polyelectrolyte complex) that will separate from the aqueous phase. When the aqueous polymer solutions contain water-soluble mineral salts in a sufficient amount to at least partially screen the opposite charges of the polymers, the attraction between the polyanion and polycation will be reduced and formation of a solid complex be prevented. Upon mixing of such solutions, one will observe phase separation with, on the one hand, a concentrated polymer-rich phase, called "coacervate", and, on the other hand, a polymer-depleted supernatant phase. A detailed description of this phenomenon can be found for example in Wang et al, "The Polyelectrolyte Complex/Coacervate Continuum", Macromolecules, 2014, 47, 3108-3116. Such polyelectrolyte coacervates or polyelectrolyte complexes will be referred to hereafter as PEC (PolyElectrolyte Complex/Coacervate).

Surprisingly, the inventors have demonstrated that, a hydraulic binder could be combined with polyelectrolytes to provide a simple and efficient solution for water leak or underwater leak repair. A fast sealing of the leak with a low washout was obtained by using this solution. Also, the inventors have demonstrated that the resulting seal has excellent mechanical properties, in particular a high compression strength.

Thus, the present invention relates to a composition comprising:
- a cationic polyelectrolyte,
- an anionic polyelectrolyte,
- a water-soluble mineral salt, and
- a hydraulic binder.

In some embodiments, said cationic polyelectrolyte is a strong polyelectrolyte.

**In** some embodiments, the hydraulic binder is chosen from Ordinary Portland Cements, Calcium Aluminate Cements, Calcium Sulfoaluminate Cements, fly ashes, slags, hydraulic lime, source of calcium sulfate and mixtures thereof.

**In** some embodiments, the composition further comprises aggregates.

In some embodiments, the water-soluble mineral salt is selected from the group consisting of alkaline metal or alkaline earth metal salts, preferably from alkaline metal or alkaline earth metal halogenides. In some embodiments, the ratio of the number of positive charges of the cationic polyelectrolyte to the number of negative charges of the anionic polyelectrolyte is from 0.5 to 2.0, preferably from 0.6 to 1.8.

In some embodiments, the weight ratio of the total amount of cationic and anionic polyelectrolytes to the amount of hydraulic binder is from 0.0001 to 10000, preferably from 0.0001 to 100, more preferably from 0.0001 to 10, even more preferably from 0.001 to 2, or even from 0.001 to 1.5, more particularly from 0.01 to 0.8, even more particularly from 0.01 to 0.2, for instance from 0.02 to 0.15. In some embodiments, the weight ratio of the total amount of cationic and anionic polyelectrolyte to the amount of water-soluble mineral salt is from 0.10 to 4.0, preferably from 0.50 to 2.50, more preferably from 0.80 to 1.50.

In some embodiments, the cationic and anionic polyelectrolytes together represent from 0.1 to 30 wt%, preferably from 0.5 to 25 wt%, more preferably from 1 to 15 wt%, even more preferably from 1 to 10 wt%, based on the total dry weight of the composition.

In some embodiments, the weight content of hydraulic binder is from 50 to 98 wt%, preferably from 60 to 97 wt%, more preferably from 70 to 96 wt%, even more preferably from 80 to 95 wt%, based on the total dry weight of the composition.

In some embodiments, the composition is a mono-component powder composition.

In some embodiments, the composition is a two-component composition comprising:
- a first component comprising said cationic polyelectrolyte, said anionic polyelectrolyte, said water-soluble mineral salt, and water; and
- a second component comprising said hydraulic binder, and optionally aggregates.

In some embodiments, the cationic and anionic polyelectrolytes together represent from 1 to 45 wt%, preferably from 2 to 40 wt%, more preferably from 4 to 40 wt%, for instance from 5 to 30 wt% of the weight of the first component.

In some embodiments, water represents from 30 to 90 wt%, preferably from 40 to 80 wt%, of the weight of the first component.

In some embodiments, the total weight content of hydraulic binder and optional aggregates is more than 70 wt%, preferably from 75 to 99 wt%, more preferably from 80 to 95 wt%, of the weight of the second component.

The present invention also relates to a method for repairing a water or underwater leak, comprising applying a composition as defined herein into said water or underwater leak.

In some embodiments, the water leak is a water leak of a leaking underground structure, said underground structure being preferably chosen from tunnels (such as subway tunnels, utility tunnels, microtunnels, road or rail traffic tunnels), parkings, train stations, subway stations, basements, building foundations, shafts, and galleries in mines.

### FIGURES

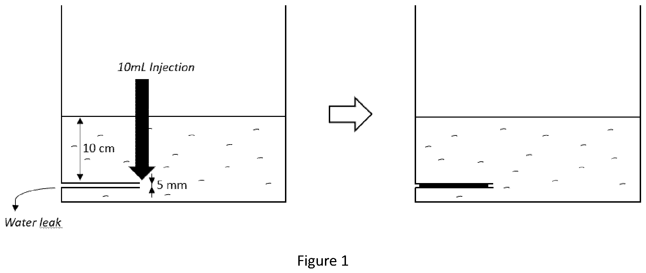

Figure 1 : schematic representation of a test for assessing the ability of a composition to repair a water leak.

### DETAILED DESCRIPTION

The composition of the invention comprises a cationic polyelectrolyte and an anionic polyelectrolyte.

The term "a cationic polyelectrolyte" encompasses one cationic polyelectrolyte but also mixtures of two or more cationic polyelectrolytes. The term "an anionic polyelectrolyte" encompasses one anionic polyelectrolyte, but also mixtures of two or more anionic polyelectrolytes.

The polyelectrolytes may be strong or weak polyelectrolytes. A strong polyelectrolyte is a polymer with a net positive (i.e. strong cationic polyelectrolyte) or net negative (i.e. strong anionic polyelectrolyte) charge that is essentially independent of the pH of the composition.

In particular, the zeta potential of a strong cationic polyelectrolyte is positive for any pH in the range from 1 to 14 and the zeta potential of a strong anionic polyelectrolyte is negative for any pH in the range from 1 to 14. The zeta potential can be measured using a zeta potential analyzer (e.g. "zetasizer" device) at a suitable concentration (generally greater than 0.01%, for example 1%, by weight of polyelectrolyte relative to the volume of solution analyzed) and generally at 20°C.

Strong cationic polyelectrolytes are for example polymers comprising a plurality of quaternized amine groups. Strong anionic polyelectrolytes are for example polymers comprising a plurality of sulfonate (-SO₃⁻ groups).

Poly(acrylic acid) is an example of a weak anionic polyelectrolyte and non-quaternized polyamines are examples of weak cationic polyelectrolytes, because their net charge is dependent of the pH.

Preferably, the cationic polyelectrolyte is a strong cationic polyelectrolyte.

More preferably, the anionic polyelectrolyte and the cationic polyelectrolyte are both strong polyelectrolytes.

In the present invention, an anionic polyelectrolyte is a polymer with a net negative charge at pH 7 and a cationic polyelectrolyte is a polymer with a net positive charge at pH 7. This does not mean that an anionic polyelectrolyte comprises only negative charges and is free of positive charges. By analogy, cationic polyelectrolytes may comprise both cationic and anionic charges as long as, at pH 7, the overall net charge is positive.

Consequently, the definition of anionic polyelectrolytes encompasses zwitterionic polyelectrolytes having an isoelectric point (pl) < 7, preferably < 6, and the definition of cationic polyelectrolytes encompasses zwitterionic polyelectrolytes having an isoelectric point (pl) > 7, preferably > 8. The most commonly known zwitterionic polyelectrolytes are proteins or peptides comprising both pending carboxyl groups (-COOH) and pending amino groups (-NH₂).

In a preferred embodiment, the anionic polyelectrolyte comprises only negative charges and is free of positive charges, and the cationic polyelectrolyte comprises only positive charges and is free of negative charges.

The anionic polyelectrolyte and the cationic polyelectrolyte preferably are linear, non-branched polymers.

The cationic groups of the cationic polyelectrolyte are for example primary, secondary, or tertiary amino groups or quaternized amine groups, located in the main chain of the polymer or on pending groups.

The anionic groups of the anionic polyelectrolyte are for example selected from the group consisting of carboxylate, sulphonate, phosphonate, boronate, sulphate, borate, and phosphate groups, located in the main chain of the polymer or on pending groups thereof.

The cationic polyelectrolyte is preferably selected from the group consisting of:
- poly(diallyldimethylammonium chloride) (PDADMAC),
- poly[ (2-hydroxypropyl)dimethylammonium chloride],
- polyamidoamine-epichlorhydrine (PAAE),
- polyethyleneimine,
- poly(acrylamide-co-diallyldimethylammonium chloride),
- copolymer of hydroxyethylcellulose and poly(diallyldimethylammonium chloride) (Polyquaternium-4),
- copolymer of acrylamide and dimethylaminoethylmethacrylate quaternized with dimethyl sulphate (Polyquaternium-5, CAS 26006-22-4),
- copolymer of dimethylaminomethyl methacrylate and alkyl methacrylate
- chitosan,
- poly(quaternized N,N-(dimethylamino)ethyl methacrylate),
- guar hydroxypropyltrimonium chloride,
- poly(N,N-dimethyl-3,5-dimethylene piperidinium chloride),
- poly(vinylbenzyltrimethylammonium chloride),
- poly[3-(methacryloylamino)propyl-trimethylammonium chloride],
- poly([2-(methacryloloxy)ethyl]-trimethylammonium chloride),
- polyvinylamine (PVA),
- poly(N,N-dimethyl-3,5-dimethylene piperidinium chloride) (PDDPC),
- poly(vinylbenzyltrimethylammonium chloride) (PVBTAC),
- poly(allylamine chloride) (PAH),
- poly[3-(methacryloylamino)propyltrimethylammonium chloride] (PMAPTAC), and
- cationic dextran.

The anionic polyelectrolyte preferably is selected from the group consisting of the salts, preferably sodium salts, of poly(acrylic acid), poly(acrylic acid-co-acrylamido), poly(4-styrene-sulfonic acid), lignosulfonic acid, humic acid, alginic acid, poly(2-acrylamido-2-methyl-1-propanesulfonic acid), hyaluronic acid, poly(vinylsulfonic acid), and dextran-sulfate.

The weight average molecular weight (determined by light scattering) of the anionic and cationic polyelectrolytes is typically comprised between 5000 and 2 000 000 Da, preferably between 10 000 and 1 500 000 Da, more preferably between 20 000 and 1 000 000 Da, even more preferably between 50 000 and 700 000 Da, for instance between 100 000 and 500 000 Da.

The anionic polyelectrolyte and cationic polyelectrolyte preferably have similar molecular weights.

The ratio of the weight average molecular weight of the anionic polyelectrolyte to the weight average molecular weight of the cationic polyelectrolyte is preferably comprised between 0.4 and 1.6, more preferably between 0.7 and 1.3 and still more preferably between 0.8 and 1.2.

The composition of the invention comprises advantageously similar amounts of a cationic polyelectrolyte and an anionic polyelectrolyte, "similar amounts" meaning here that these two types of polyelectrolytes of opposite charges are used in respective amounts such that the ratio of the number of positive charges of the polycation to the number of negative charges on the polyanion is comprised between 0.5 and 2.0, preferably between 0.6 and 1.8, more preferably between 0.7 and 1.6 and still more preferably between 0.8 and 1.4, or even between 0.9 and 1.2.

The cationic polyelectrolyte and anionic polyelectrolyte together preferably represent from 0.1 to 30 wt%, 0.2 to 30 wt%, more preferably from 0.5 to 25 wt%, even more preferably from 1 to 15 wt%, more particularly from 1 to 10 wt%, based on the total dry weight of the composition.

The composition also comprises a water-soluble mineral salt. As used herein, "water-soluble" means having a solubility in distilled water at 20°C of more than 100 g/L, preferably more than 200 g/L, even more preferably more than 300 g/L.

The water-soluble mineral salt is advantageously selected from the group consisting of alkaline metal or alkaline earth metal salts, preferably from alkaline metal or alkaline earth metal halogenides.

Preferred alkaline metal are lithium, sodium and potassium. Preferred alkaline earth metal are calcium and magnesium. Preferred halogenides are chlorides and bromides. The function of the water-soluble mineral salt is to screen the opposite charges and to thereby reduce the ionic interaction between the polyelectrolytes, to prevent the formation of a solid insoluble polyelectrolyte complex and to allow the formation of a coacervate (a viscous polyelectrolyte-rich solution). The water-soluble mineral salt preferably is a monovalent metal salt, i.e. an alkaline metal halogenide. Alkaline earth metal salts, when present, preferably do not represent more than 20 mol % of the total mineral salts.

The weight ratio of the total amount of cationic polyelectrolyte and anionic polyelectrolyte to the total amount of water-soluble mineral salt is preferably comprised between 0.10 and 4.0, more preferably between 0.50 and 2.50, and still more preferably between 0.80 and 1.50.

The amount of water-soluble mineral salt is typically comprised between 30 and 90 % by weight, preferably between 35 and 70 % by weight, more preferably between 40 and 60 % by weight, with respect to the total dry weight of cationic polyelectrolyte, anionic electrolyte and water-soluble mineral salt.

The composition may further comprise a water-soluble polyphenol comprising at least one polyhydroxylated aromatic ring structure, optionally in combination with a water-soluble polyvalent transition metal salt. Such polyphenol can have beneficial effect on the physico-chemical and/or mechanical properties of the final materials.

The total amount of polyphenol(s) is advantageously comprised between 0.001 % and 0.5 % by weight, preferably between 0.01 and 0.25 % by weight, more preferably between 0.05 and 0.5 % by weight or between 0.02 and 0.1 % by weight, based on the total dry weight of the composition.

The term "polyphenol" refers to an organic compound comprising at least one polyhydroxylated aromatic ring structure, "polyhydroxylated" meaning comprising two hydroxyls on the same aromatic ring.

In a preferred embodiment, at least part of the polyphenols used in the composition comprise more than one polyhydroxylated aromatic ring structure, i.e. at least two, preferably at least three, and more preferably at least four polyhydroxylated aromatic ring structures.

The polyhydroxylated aromatic ring structures are preferably selected from the groups consisting of catechol groups, pyrogallol groups, tetrahydroxylated aromatic ring structures and pentahydroxylated aromatic ring structures.

In a particularly interesting embodiment, the polyphenol is tannic acid.

Recently, synthetic organic polymers comprising comonomers with polyhydroxylated ring structures have been described (see for example the work of Cheng et al., in Nature Communications, 13, article number 1892 (2022)). This type of polymer of course would also very efficiently reinforce the final seals obtained from the composition.

In another preferred embodiment of the present invention, the polyphenol is a synthetic copolymer comprising comonomers with polyhydroxylated ring structures, preferably a copolymer of styrene and of a comonomer selected from dihydroxystyrene, trihydroxystyrene, tetrahydroxystyrene and pentahydroxystyrene.

The polyphenol(s) may be associated with polyvalent transition metal ions. In an embodiment, the composition therefore further comprises a water-soluble polyvalent transition metal salt or a mixture of polyvalent transition metal salts. When expressed with respect to the water-soluble polyphenol, the weight ratio of the transition metal salt to the dry weight of the polyphenol is typically comprised between 0.1 and 0.2, preferably between 0.12 and 0.18.

The transition metals are preferably selected from the group consisting of Fe, Zn, Co, Cu, and V. Halogenides, in particular chlorides and bromides, are preferred anions of the reinforcing transition metal salts used in the present invention.

The composition of the invention also comprises a hydraulic binder. Said hydraulic binder refers to a binder that hardens by hydraulic reaction.

The hydraulic binder is preferably selected from Ordinary Portland Cements (OPC), Calcium Aluminate Cements (CAC), Calcium Sulfoaluminate Cements (CSA), fly ashes, slags such as ground granulated blast furnace slags, hydraulic lime, source of calcium sulfate and mixtures thereof. More preferably, the hydraulic binder comprises or consists of one or more of Ordinary Portland Cement, Calcium Aluminate Cement, and Calcium Sulfoaluminate Cement, and optionally in admixture with one or more of fly ashes, slags such as ground granulated blast furnace slags, and hydraulic lime.

The term "Portland cement" means a cement of the CEM I to CEM V type, especially of the CEM I or CEM II type, as defined in EN 197-1. A CEM I cement comprises at least 95wt% of clinker, while a CEM II cement comprises at least 65wt% of clinker and at most 35wt% of at least one of blast-furnace slag, silica fume, pozzolana, fly ash, burnt shale and limestone.

The source of calcium sulfate is preferably selected from gypsum, hemihydrate, anhydrite and any mixture of these compounds.

The weight content of hydraulic binder is advantageously from 40 to 98 wt%, preferably from 50 to 98 wt%, more preferably from 60 to 97 wt%, even more preferably from 70 to 96 wt%, for instance from 80 to 95 wt%, based on the total dry weight of the composition.

The weight ratio of the total amount of cationic and anionic polyelectrolytes to the amount of hydraulic binder is advantageously from 0.0001 to 10000, preferably from 0.0001 to 100, more preferably from 0.0001 to 10, even more preferably from 0.001 to 2, or even from 0.001 to 1.5, more particularly from 0.01 to 0.8, even more particularly from 0.01 to 0.2, for instance from 0.02 to 0.15. For instance, the weight ratio of the total amount of cationic and anionic polyelectrolytes to the amount of hydraulic binder may be from 0.001 to 100.

The composition of the invention may further comprise aggregates. Preferably, aggregates comprise (preferably consist of) siliceous aggregates, carbonaceous aggregates, sands, or any mixture thereof. Aggregates are, for example, silica sand, siliceous sand, ground limestone, limestone sand, chalk, marble, clay, marl, aluminum oxide, talc, barite, dolomite, magnesite, mica, basalt, kaolin, wollastonite, laponite, and mixtures thereof.

Aggregates may also comprise (preferably consist of) organic materials, for example shredded plastic waste, such as plastic waste composed of polyvinyl chloride, polystyrene, polyethylene, polypropylene or melamine resins. Rubber particles and/or polystyrene spheres may also be used. Aggregates may also comprise (preferably consist of) pigments and/or fibers (e.g. synthetic polymeric fibers, fibers coming from renewable resources such as cellulose fibers or wood fibers).

The mean particle size of the aggregates, as measured by microscopy, is generally higher than or equal to 100 µm, preferably from 100 µm to 30 mm, more preferably from 500 µm to 5 mm.

The weight content of aggregates (when present) is advantageously from 5 to 50 wt%, preferably from 15 to 40 wt%, more preferably from 20 to 35 wt%, based on the total dry weight of the composition.

The composition of the invention may further comprise fillers. Fillers may typically be chosen from the materials described above for aggregates. Fillers are different from aggregates in that they have a lower particle size. The mean particle size of the fillers, as measured by microscopy, is generally lower than 100 µm, preferably from 0.04 to 90 µm, more preferably from 0.1 to 20 µm, even more preferably from 0.2 to 5 µm.

The weight content of fillers (when present) is advantageously from 5 to 50 wt%, preferably from 15 to 40 wt%, more preferably from 20 to 35 wt%, based on the total dry weight of the composition.

The composition may further comprise organic polymer (which are typically water-insoluble particles) having glass transition temperatures below 20°C, preferably below 0°C (as measured by differential scanning calorimetry). Such organic polymer preferably is selected from acrylic polymers, styrene-acrylic polymers, styrene-butadiene polymers, chloroprene, natural rubber (e.g. deproteinized natural rubber) and polyvinyl acetal polymers (e.g. polyvinyl butyral). In a preferred embodiment, the organic polymer is natural rubber (e.g. deproteinized natural rubber). The dry weight ratio of the amount of organic polymer to the total amount of cationic and anionic polyelectrolytes typically is comprised between 0.5/1 and 7/1, preferably between 0.5/1 and 5/1, more preferably between 0.7/1 and 3/1, even more preferably between 0.7/1 and 2.5/1, for instance between 1/1 and 2/1.

The organic polymers are generally commercialized as waterborne (or equivalently "aqueous") dispersions or solventborne (e.g. alcoholic) dispersions.

Redispersible polymer powders (for instance, redispersible polymer based on ethylene-vinyl acetate, ethylene-vinyl chloride, styrene-butadiene rubber, or silicone) may advantageously be used instead of polymer dispersions. Such solvent-free dispersible powders of organic polymer are commercialized for example under the references Vinnapas^{®} 7150 E, Vinnapas^{®} 7055 E, Vinnapas^{®} 3030H by Wacker, and ELOTEX^{®} FX2630 by Celanese.

The composition may further comprise a hydrophobic agent, added for instance as an emulsion. The hydrophobic agent may be a wax, for example paraffin wax, polyethylene wax, polypropylene wax, silicone wax and poly(tetrafluoroethylene) wax. Hydrophobic resins, for example hydrophobic silicone resins such as Variphob^{®} AC 3030, may also efficiently be used as hydrophobic agents.

The hydrophobic agent is typically used in amounts up to 15 % by weight, preferably comprised between 0.001 and 10 % by weight, more preferably between 0.01 and 2 % by weight, based on the total dry weight of the composition.

The composition may further comprise up to 15 %, preferably from 0.01 to 10 % (by weight, based on the total dry weight of the composition) of one or more additives selected from the group consisting of dyes, pigments, biocides, buffer agents, surfactants, dispersants, thickening agents, retarders, accelerators, plasticizers, superplasticizers, water retainers, defoaming agents, extenders and anticaking agents.

Retarders and accelerators make it possible to control the hydraulic reaction, and may be selected from salts of lithium, salts of calcium, salts of sodium, acids, phosphates and sulfates.

The composition of the invention may be a mono-component composition (typically, a mono-component powder composition) or a two-component composition.

For the above weight contents based on the "total dry weight of the composition", it is understood that, when said composition is a two-component composition, the total dry weight of the composition refers to the sum of the dry weights of components of the composition.

A two-component composition may also be called a "kit".

Preferably, the composition is a two-component composition comprising:
- a first component comprising said cationic polyelectrolyte, said anionic polyelectrolyte, said water-soluble mineral salt, and water; and
- a second component, which is preferably a powder component, comprising said hydraulic binder, and optionally aggregates.

Typically, the first component does not comprise a hydraulic binder. Typically, the second component does not comprise water (and preferably does not comprise a cationic polyelectrolyte and an anionic polyelectrolyte).

It is understood that said first component and said second component are in separate compartments.

The cationic and anionic polyelectrolytes together represent advantageously from 1 to 45 wt%, preferably from 2 to 40 wt%, more preferably from 4 to 40 wt%, for instance from 5 to 30 wt% of the weight of the first component.

Water represents advantageously from 30 to 90 wt%, preferably from 40 to 80 wt%, of the weight of the first component.

The total weight content of hydraulic binder and optional aggregates is advantageously more than 70 wt%, preferably from 75 to 99 wt%, more preferably from 80 to 95 wt%, of the weight of the second component.

When the composition of the invention is a two-component composition, with said first and second components being as described above:
- the first component can be prepared by first dissolving each of the cationic and anionic polyelectrolytes separately in an aqueous solution of the water-soluble mineral salt. The salt concentration is typically comprised between 0.05M and 6 M, preferably between 0.2 and 2.5 M, and more preferably between 0.5 and 2.0 M. The higher the molecular weight of the polyelectrolyte, the higher must be the ionic strength of the salt solution. Hence, for weight average molecular weights of less than 100 000 Da, salt concentrations of between 0.2 and 1 M should be sufficient. For dissolving polyelectrolytes with weight average molecular weights above 400 000, salt concentration of more than 1.8 M will be required. The pH of both polyelectrolyte solutions may be from 0.5 to 14. After complete dissolution of the polyelectrolytes, the two solutions are simply mixed together. A polymer-rich dense phase, called coacervate, will separate from a polymer-depleted surfactant phase. The two phases can be easily separated, optionally after centrifugation of the mixture. When working at an industrial scale, it is of course interesting to minimize the volume fraction of the supernatant phase. This can be done by increasing the polyelectrolyte concentration and salt concentration in the two solutions prior to mixing. It is very important to always remove the supernatant after phase separation otherwise the composition will not cure after contact with water. The solid fraction of the coacervate (polyelectrolytes and mineral salt) is typically comprised between 20 and 35 % by weight, preferably between 25 and 30 % by weight. When present, the polyphenols are preferably added to the cationic polyelectrolyte solution, prior to or after dissolving the polycation. Addition of the polyphenols to the polyanion solution leads to undesirable gelation of the solution. When present, the polyphenols may be added as such, in non-diluted form or may first be dissolved in an aqueous solution of the mineral salt. When present, the water-soluble salt of a transition metal is preferably added to the solution comprising the cationic polyelectrolyte and optionally the polyphenol, in powder form or as an aqueous solution. When present, the other additives are typically added to the coacervate after removal of the supernatant. They may be introduced either in dry form or dispersed or dissolved in an aqueous salt solution having an ionic strength similar to that of the coacervate. If desired, pH of the composition may be neutralized to pH 5 - 9, preferably pH 6 - 8, after or before addition of the other optional ingredients;
- the second component can be obtained by mixing the hydraulic binder, the optional aggregates and the other optional ingredients (said ingredients being typically in a powder form).

Optional additives as described above may be present in the first and/or second components.

When the composition of the invention is a mono-component powder composition, it can in particular be prepared by a process comprising:
- drying a mixture prepared as described above for said first component, for instance at a temperature comprised between 35 and 60°C, so as to obtain a dried mixture,
- grinding said dried mixture, so as to obtain a grinded dried mixture, and
- adding the hydraulic binder, optionally aggregates and optionally other ingredients (said ingredients being typically in a powder form).

The composition of the invention is particularly suitable for water leak or underwater leak repair (and thereby sealing said leak). Hence, the present invention also relates to a method for repairing a water or underwater leak, comprising applying a composition as defined herein into said water or underwater leak.

In one embodiment, the composition is a two-component composition as described above and the method of the invention advantageously comprises:
- mixing said first component and said second component, so as to form a mixture, and
- applying said mixture into said water or underwater leak.

In some embodiments, the method of the invention is a method for repairing an underwater leak due to an opening in a separation between two compartments, said method comprising completely filling the opening with a composition as defined herein, and contacting the composition with water, either after or during the filling of the opening with the composition. When the composition is a two-component composition as described above, the method may be a method for repairing an underwater leak due to an opening in a separation between two compartments, said method comprising:
- mixing said first component and said second component, so as to form a mixture,
- completely filling the opening with the mixture, and
- contacting the mixture with water, either after or during the filling of the opening with the mixture.

The water leak may in particular be a water leak of a leaking underground structure. Hence, the method of the invention may more particularly be a method for sealing a leaking underground structure comprising:
i) injecting a composition as defined herein into a water leak of the leaking underground structure, and
ii) contacting said composition with water of the water leak.

If the composition is a two-component composition as described above, then such method may typically comprise:
o) mixing said first component and said second component, so as to form a mixture,
i) injecting said mixture into a water leak of the leaking underground structure, and
ii) contacting said composition with water of the water leak.

As used herein, the "underground structure" refers to any construction that is built beneath the surface of the Earth, either partially or entirely. The underground structure may also be called a below-grade structure or subterranean structure. The underground structure is usually a structure made of (or essentially made of) concrete, rock, steel, or a combination thereof.

Preferably, the underground structure is selected from: tunnels (such as subway tunnels, utility tunnels, microtunnels, road or rail traffic tunnels), parkings, train stations, subway stations, basements, building foundations, shafts, and galleries in mines.

The underground structure generally features a cavity.

More specifically, the underground structure generally comprises:
- an external surface, which is in contact with the ground, and
- an internal surface, which defines at least in part (for instance, totally) said cavity.

The external surface is usually called an extrados. The internal surface is usually called or comprises a portion usually called an intrados.

The ground usually comprises soil particles, rocks, earth masses, gravel, slag, stones, strata, or any mixture thereof.

The water leak of the underground structure may be defined as a path extending between an internal surface and an external surface of the underground structure, and through which water (from a water source) is flowing. In other words, the underground structure features a through-hole extending between an internal surface and an external surface of the underground structure, such through-hole defining the leak. The through-hole typically features:
- an inlet, through which water from a water source enters the through-hole, and
- an outlet, through which water from the water source leaves the through-hole.

Such water typically comes from a water source in the ground and typically leaks from the ground to the cavity of the underground structure, through the through-hole.

The water source may be a static source or a flowing source, preferably a flowing source. Examples of water sources include, but are not limited to, groundwater, aquifer, or infiltration of rainwater. The water source may flow laterally or orthogonally to an external surface of the underground structure. In a preferred embodiment, the water source flows laterally to an external surface of the underground structure.

Preferably, the pressure of water of the water leak is from 1 to 200 bar, preferably from 1 to 20 bar. The pressure of water is typically measured at an outlet of the leak (or of the through-hole defining the leak) by using a manometer. In some embodiments, the velocity of water of the water leak is from 0.1 to 10 m/s.

Typically, the composition is injected into the leak through an outlet of the leak (or of the through-hole defining the leak). The composition may be injected into part or all of the volume of the through-hole defining the leak.

When water leaks from the ground to the cavity, through the through-hole, the composition may be injected into all of the volume of the through-hole defining the leak, and further into a part of the ground.

The temperature of the water of the water leak may be from 0.5 to 50°C, preferably from 1 to 25°C, for instance from 3 to 20°C.

Advantageously, the composition is injected into a water leak of the leaking underground structure at an injection pressure from 1 to 200 bar, preferably from 1 to 50 bar. The injection pressure can be controlled by the injection device.

As used herein, "wt%" means "% by weight".

The following examples illustrate the present invention in a non-limitative manner.

### EXAMPLES

### 1. Preparation of a PEC composition with KBr as mineral salt

180.5 g of a diluted polycation poly(diallyldimethylammonium chloride) (PDADMAC - EVA 462, SNF) at a solid content of 20wt% was added to 65 g of water and then 64.3 g of solid potassium bromide salt were added. The resulting mixture was stirred and then, 129.4 g of polyanion polystyrene sulfonate (PSS - Versal TL 130) at a solid content of 30wt% was added to the mixture. Details of the composition ("Composition A") are presented in the following table 1.

**Table 1**

| Component | Weight (g) | Weight (%) | Dry weight (%) |
|---|---|---|---|
| Water | 65 | 15% | - |
| EVA 462 | 180.5 | 41% | 25.9% |
| KBr | 64.3 | 15% | 46.2% |
| Versa-TL 130 | 129.4 | 29% | 27.9% |
| **Total** | **439.2** | **100%** | **100%** |

### 2. Two-component composition with cement and composition A

A two-component composition combining cement and a PEC composition was prepared. Its performances to stop a water leak were assessed and compared with cement and PEC composition taken separately (Table 2).

**Table 2**

| Component | CEM I | Composition A | Water | Water at 1.8 M KBr |
|---|---|---|---|---|
| 2K composition (Invention) | 100 g | 20 g | - | 27 g |
| Composition A (Comparative #1) | - | 140 g | - | - |
| CEM I (Comparative #2) | 100 g | - | 40 g | - |

### Protocol to stop a water leak

Around 10 mL of the mixture described in Table 2 above ("2K composition - Invention") were placed in a syringe and injected to block a flowing water leak inside a recipient containing water at 19°C. The water was flowing at 1.8 L/min from a 10 cm water height (around 980 Pa pressure). Diameter of the hole through which water is leaking: 5 mm. A scheme of the test is represented by Figure 1.

This mixture was compared to:
- 10 mL of liquid PEC formulation (Comparative #1),
- 10 mL of liquid cement (Comparative #2).

When the composition of the invention was used, highly fast setting of the composition upon contact with water was observed, leading to the formation of a solid seal which stopped the leak (see Figure 1, right part).

In the same conditions, the comparative compositions (i.e. comparative #1 and #2) could not stop efficiently the leak. For both comparative compositions #1 and #2, higher amounts to be injected (more than 20 mL in both cases) were needed to stop the leak.

The mechanical strength of a seal formed from cement and polyelectrolytes was assessed and compared to a seal formed from cement only.

The samples were placed in silicon molds of 10x2x2 cm. The samples were then placed underwater for 28 days. After the immersion period, the samples were removed from the water and let to dry under ambient conditions for at least 10 days.

Compression strength was then measured on 2x2cm samples cut out of the original samples.

**Table 3**

| Sample | Compression strength (MPa) |
|---|---|
| Cement (CEM I 52.5N) - Comparative | 84 |
| Composition A + Cement (CEM I 52.5N) | 63 |

Results of Table 3 show that the mixture according to the invention, combining polyelectrolytes and cement, leads to satisfactory mechanical properties after setting. The performances are comparable to those obtained when using cement only.

## Claims

1. A composition comprising:
- a cationic polyelectrolyte,
- an anionic polyelectrolyte,
- a water-soluble mineral salt, and
- a hydraulic binder.

2. The composition according to claim 1, wherein the cationic polyelectrolyte is a strong polyelectrolyte.

3. The composition according to claim 1 or 2, wherein the hydraulic binder is chosen from Ordinary Portland Cements, Calcium Aluminate Cements, Calcium Sulfoaluminate Cements, fly ashes, slags, hydraulic lime, source of calcium sulfate and mixtures thereof.

4. The composition according to any one of claims 1 to 3, wherein the composition further comprises aggregates.

5. The composition according to any one of claims 1 to 4, wherein the water-soluble mineral salt is selected from the group consisting of alkaline metal or alkaline earth metal salts, preferably from alkaline metal or alkaline earth metal halogenides.

6. The composition according to any one of claims 1 to 5, wherein the weight ratio of the total amount of cationic and anionic polyelectrolytes to the amount of hydraulic binder is from 0.0001 to 10000, preferably from 0.0001 to 100, more preferably from 0.0001 to 10, even more preferably from 0.001 to 2, or even from 0.001 to 1.5, more particularly from 0.01 to 0.8, even more particularly from 0.01 to 0.2, for instance from 0.02 to 0.15.

7. The composition according to any one of claims 1 to 6, wherein the cationic and anionic polyelectrolytes together represent from 0.1 to 30 wt%, preferably from 0.5 to 25 wt%, more preferably from 1 to 15 wt%, even more preferably from 1 to 10 wt%, based on the total dry weight of the composition.

8. The composition according to any one of claims 1 to 7, wherein the weight content of hydraulic binder is from 50 to 98 wt%, preferably from 60 to 97 wt%, more preferably from 70 to 96 wt%, even more preferably from 80 to 95 wt%, based on the total dry weight of the composition.

9. The composition according to any one of claims 1 to 8, wherein the composition is a mono-component powder composition.

10. The composition according to any one of claims 1 to 8, wherein the composition is a two-component composition comprising:
- a first component comprising said cationic polyelectrolyte, said anionic polyelectrolyte, said water-soluble mineral salt, and water; and
- a second component comprising said hydraulic binder, and optionally aggregates.

11. The composition according to claim 10, wherein the cationic and anionic polyelectrolytes together represent from 1 to 45 wt%, preferably from 2 to 40 wt%, more preferably from 4 to 40 wt%, for instance from 5 to 30 wt% of the weight of the first component.

12. The composition according to claim 10 or 11, wherein water represents from 30 to 90 wt%, preferably from 40 to 80 wt%, of the weight of the first component.

13. The composition according to any one of claims 10 to 12, wherein the total weight content of hydraulic binder and optional aggregates is more than 70 wt%, preferably from 75 to 99 wt%, more preferably from 80 to 95 wt%, of the weight of the second component.

14. A method for repairing a water or underwater leak, comprising applying a composition as defined in any one of claims 1 to 13 into said water or underwater leak.

15. The method according to claim 14, wherein the water leak is a water leak of a leaking underground structure, said underground structure being preferably chosen from tunnels, parkings, train stations, subway stations, basements, building foundations, shafts, and galleries in mines.
